# FASCICULE DE BREVET EUROPEEN

(11) **EP 3 173 185 B1**
(45) Date de publication et mention de la délivrance du brevet: **24.08.2022**
(21) Numéro de dépôt: 16200654.8
(22) Date de dépôt: 25.11.2016
(51) Int. Cl.: B23Q 1/01, B23Q 39/02

(54) **MACHINE-OUTIL**
WERKZEUGMASCHINE
MACHINE TOOL

(30) Priorité: 27.11.2015 FR 1561459; 24.03.2016 FR 1652533
(43) Date de publication de la demande: 31.05.2017
(73) Titulaire: Numalliance, 88470 Saint-Michel-sur-Meurthe (FR)
(72) Inventeur: ETIENNE, Joël, 88100 SAINT DIE DES VOSGES (FR)
(74) Mandataire: Cabinet Bleger-Rhein-Poupon

(56) Documents cités:
- EP-A1- 2 527 080
- EP-A2- 0 669 187
- DE-A1- 3 216 566
- DE-A1- 4 106 073

## Description

La présente invention a pour trait le domaine des machines-outils.

Ces machines-outils sont notamment utilisées pour un usinage et pour l'exécution d'une tâche répétitive, elles s'utilisent comme moyen de production à la chaîne. Ces machines-outils sont équipées d'un ou plusieurs outil(s) fixe(s), mobile(s) ou tournant(s), destinés à traiter une pièce.

Les machines-outils de l'art antérieur comprennent généralement une partie avant ou frontale de travail, équipée dans la plupart des cas d'une table fixe ou mobile destinée à recevoir la pièce à traiter, où un outil, parfois plusieurs, est susceptible de traiter ladite pièce, et devant laquelle peut se placer un opérateur.

Actuellement une machine-outil peut comporter plusieurs outils disposés frontalement dans le sens transversal, en sorte que l'opérateur puisse réaliser le traitement de la pièce à fabriquer ou à transformer, en la faisant passer d'un outil à un autre. En d'autres termes, ces outils sont disposés de front par rapport à un opérateur, sur la partie avant de la machine-outil, dans le sens transversal.

Il est possible, dans un but d'ergonomie, de prévoir que les différents outils soient mobiles transversalement, ou bien disposés radialement sur un arbre mobile en pivotement selon un axe perpendiculaire à la table comme cela est montré dans le document EP 0 669 187. L'inconvénient de ces conceptions est que si le traitement des pièces nécessite un grand nombre d'outils, l'encombrement, notamment dans le sens transversal, soit trop important. Il convient donc de trouver une solution pour que l'encombrement transversal des outils, c'est-à-dire l'encombrement sur la largeur de la machine-outil, soit le plus réduit possible, tout en gardant le même nombre d'outils nécessaires à l'usinage ou au traitement de la pièce.

La présente invention a pour but de proposer une machine-outil dont l'architecture permet de remédier aux divers inconvénients précités. L'invention a ainsi pour objet une machine-outil dont l'architecture originale permet l'utilisation de plusieurs outils dans un encombrement réduit, lequel est inférieur à celui nécessaire avec les machines-outils connues.

La machine-outil selon l'invention comprend un bâti muni frontalement d'une table destinée à recevoir la pièce à fabriquer ou à transformer, et elle se caractérise en ce qu'elle comporte un barillet monté sur un arbre d'axe transversal parallèle à ladite table, porté par des moyens mobiles en translation horizontale dans le sens d'éloignement et/ou de rapprochement de ladite table, entre deux parois latérales dudit bâti sur des systèmes de glissières, en sorte de permettre une translation d'avant arrière dudit barillet, lequel porte radialement des outils chacun apte à être utilisé individuellement pour traiter ladite pièce, au gré du pivotement dudit barillet selon un angle choisi, ladite translation horizontale étant réalisée entre chaque changement d'outil

Selon une caractéristique additionnelle de la machine selon l'invention, l'arbre est porté par des moyens mobiles en translation verticale.

Selon une autre caractéristique additionnelle de la machine selon l'invention, la table est disposée transversalement par rapport au bâti.

Selon une autre caractéristique additionnelle de la machine selon l'invention, la table est montée mobile en rotation selon un axe vertical.

De manière avantageuse, les outils étant disposés à l'intérieur du bâti de la machine-outil, la table est libre en sorte qu'elle peut comporter un dispositif maintien de la pièce à traiter, qui autorise des opérations de chargement/déchargement en temps masqué.

Ainsi, la machine-outil comporte un dispositif de chargement/déchargement de la pièce à traiter, coopérant avec la table, et comportant des moyens de maintien de ladite pièce, conçus mobiles longitudinalement le long de ladite table, et aptes à être chargés d'un côté de ladite table, être déplacés et maintenus à un emplacement accessible aux outils du barillet, et être déplacé de l'autre côté de ladite table pour être déchargé et rechargé.

Les avantages et les caractéristiques de la machine-outil selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective d'une partie d'une machine-outil selon l'invention.
- la figure 2 représente une vue schématique en perspective et avec éclaté partiel de la même machine-outil.
- la figure 3 représente une vue schématique en perspective et avec éclaté partiel d'une partie de la même machine-outil.
- la figure 4 représente une vue schématique en perspective d'une machine-outil selon l'invention.

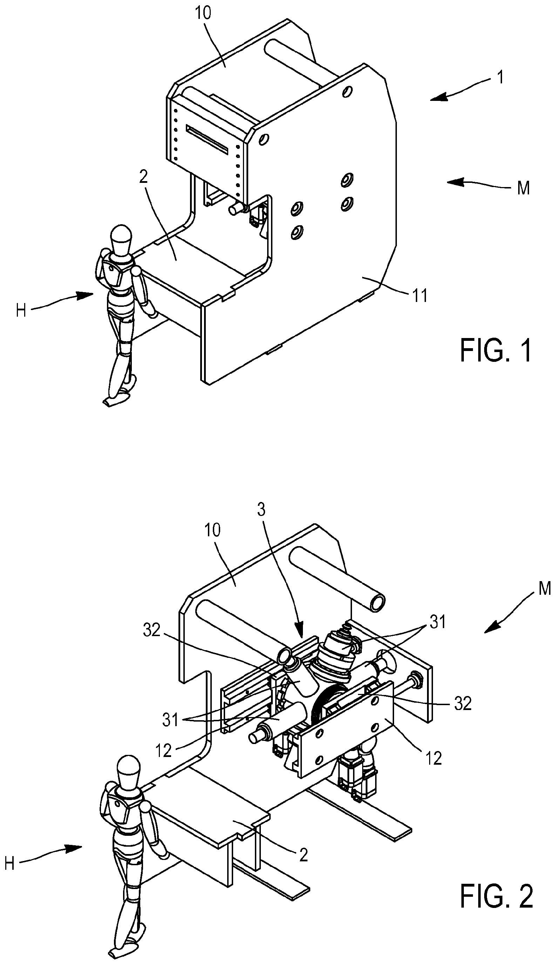

En référence à la figure 1, on peut voir une machine-outil M selon l'invention, qui comporte un bâti 1 comprenant deux parois latérales 10 et 11, et frontalement une table 2 devant laquelle se tient un opérateur H.

La partie frontale de la machine outils M représente l'avant du bâti 1, où se positionne l'opérateur H travaillant à proximité de ladite table 2.

Il est à noter que dans le mode de réalisation représenté, la table 2 est fixe, elle pourrait toutefois être prévue mobile dans différentes directions, transversales, longitudinales, verticales et également tournante selon un axe vertical.

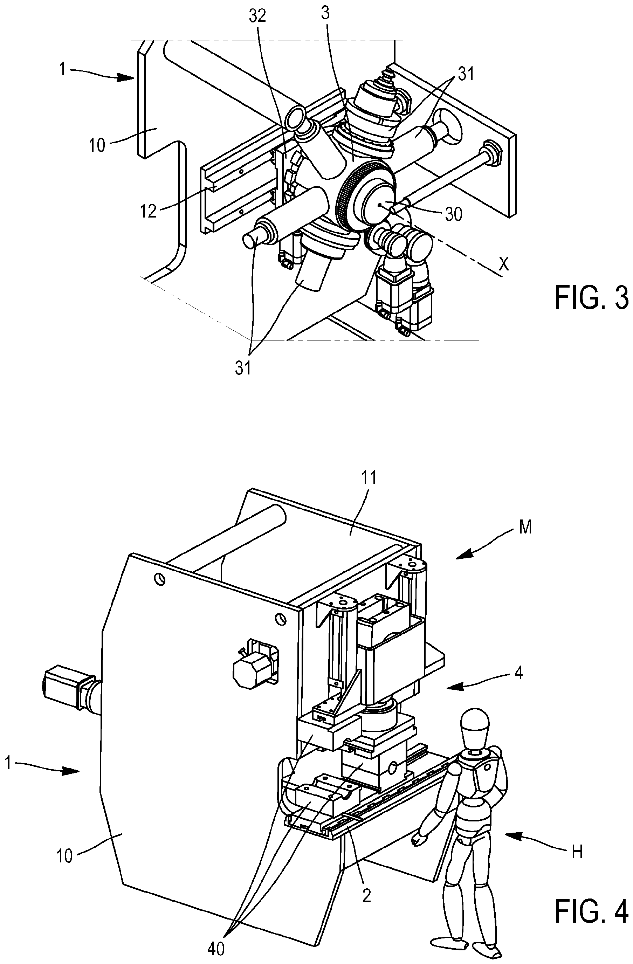

En référence aux figures 2 et 3, on peut voir que le bâti 1 comporte intérieurement un barillet 3, porté par un arbre 30, d'axe XX' transversal, c'est-à-dire parallèle à la table 2, et que ce barillet 3 porte des outils 31, en l'occurrence au nombre de six, répartis radialement.

On notera que le nombre d'outils 31 est variable, qu'il n'est pas limité à six.

La rotation du barillet 3 selon un angle donné permet de sélectionner l'outil 31 correspondant à une opération, une succession de rotations selon des angles prédéfinis permet de sélectionner une séquence d'utilisation d'outils 31 différents.

La rotation du barillet 3 est totale ou partielle, c'est-à-dire que le barillet 3 est capable de faire un tour de 360°C, ou moins, autour de l'axe XX' de l'arbre 30.

On peut voir d'autre part, que dans le mode de réalisation représenté, l'arbre 30 est porté par deux coulisses 32 aptes à se déplacer entre les deux parois latérales 10 et 11 du bâti 1 sur des systèmes 12 de glissières dont un seul est visible sur la figure 3. Ces deux coulisses 32 et systèmes 12 de glissières permettent une translation d'avant arrière du barillet 3, ce mouvement pouvant être nécessaire entre chaque changement d'outil 31.

Il est à noter qu'il peut également être prévu des moyens de déplacement vertical de l'arbre 30 et donc du barillet 3, en sorte de pouvoir amener les outils 31 à une hauteur de travail déterminée.

Ainsi, la conception particulière et spécifique de la machine-outil M de l'invention permet l'utilisation de plusieurs outils pour usiner ou traiter une pièce dans un espace réduit sur un plan horizontal. La machine-outil M de l'invention a pour avantage d'occuper peu de place en largeur, et peut être utilisé dans des petites pièces.

En référence maintenant à la figure 4, on peut voir que la machine-outil M selon l'invention comporte frontalement, sur sa partie avant, un dispositif 4 de chargement/déchargement de la pièce à traiter.

Ce dispositif comprend, disposés sur la table 2, des moyens 40 de maintien de la pièce à traiter, lesquels sont rendus mobiles.

Selon un mode de réalisation non limitatif, les moyens de maintien 40 sont mobiles dans le sens transversal, longitudinalement le long de ladite table 2.

Le positionnement et la mobilité des moyens 40 permettent que la pièce à traiter soit chargée d'un côté, traitée centralement au droit des outils 31, et que la pièce traitée puisse être déchargée de l'autre côté, tandis qu'immédiatement après avoir été déchargé, le moyen de maintien 40 soit chargé d'une nouvelle pièce à traiter.

Chaque opération de chargement/déchargement peut ainsi être réalisée en temps masqué, pendant le traitement de la pièce.

## Revendications

1. Machine-outil (M) comprenant un bâti (1) muni frontalement d'une table (2) destinée à recevoir la pièce à fabriquer ou à transformer, un barillet (3) monté sur un arbre (30) d'axe transversal (XX') parallèle à ladite table (2),
la machine-outil étant **caractérisée en ce que** le barillet (3) est porté par des moyens (32) mobiles en translation horizontale dans le sens d'éloignement et/ou de rapprochement de ladite table (2), entre deux parois latérales (10, 11) dudit bâti (1) sur des systèmes (12) de glissières, en sorte de permettre une translation d'avant arrière dudit barillet (3), lequel porte radialement des outils (31) chacun apte à être utilisé individuellement pour traiter ladite pièce, au gré du pivotement dudit barillet (3) selon un angle choisi, ladite translation horizontale pouvant être réalisée entre chaque changement d'outil (31) .

2. Machine-outil (M) selon la revendication 1, **caractérisée en ce que** l'arbre (30) est porté par des moyens mobiles en translation verticale.

3. Machine-outil (M) selon l'une quelconque des revendications 1 à 2, **caractérisée en ce que** la table (2) est disposée transversalement par rapport au bâti (1).

4. Machine-outil (M) selon l'une quelconque des revendications 1 à 2, **caractérisée en ce que** la table (2) est montée mobile en rotation selon un axe vertical.

5. Machine-outil (M) selon l'une quelconque des revendications 1 à 3, **caractérisée en ce qu'**elle comporte un dispositif de chargement/déchargement (4) de la pièce à traiter, coopérant avec la table (2), et comportant des moyens de maintien de ladite pièce, conçus mobiles longitudinalement le long de ladite table (2), et aptes à être chargés d'un côté de ladite table (2), être déplacés et maintenus à un emplacement accessible aux outils (31) du barillet (3), et être déplacé de l'autre côté de ladite table (2) pour être déchargé et rechargé.

## Patentansprüche

1. Werkzeugmaschine (M), umfassend ein Gestell (1), das stirnseitig mit einem Tisch (2) versehen ist, der dafür bestimmt ist, das herzustellende oder umzuformende Werkstück aufzunehmen, eine Revolvertrommel (3), die auf einer Welle (30) mit Querachse (XX') parallel zu dem Tisch (2) montiert ist, wobei die Werkzeugmaschine **dadurch gekennzeichnet ist, dass** die Revolvertrommel (3) durch Mittel (32) getragen wird, die in der Entfernungs- und/oder Annäherungsrichtung des Tisches (2) zwischen zwei Seitenwänden (10, 11) des Gestells (1) auf Gleitsystemen (12) in horizontaler Verschiebung beweglich sind, um eine Vorwärts- und Rückwärtsverschiebung der Revolvertrommel (3) zu ermöglichen, welche Werkzeuge (31) radial trägt, die jeweils geeignet sind, um zum Bearbeiten des Werkstücks je nach dem Schwenken der Revolvertrommel (3) gemäß einem gewählten Winkel einzeln verwendet zu werden, wobei die horizontale Verschiebung zwischen jedem Wechsel des Werkzeugs (31) durchgeführt werden kann.

2. Werkzeugmaschine (M) nach Anspruch 1, **dadurch gekennzeichnet, dass** die Welle (30) durch Mittel getragen wird, die in vertikaler Verschiebung beweglich sind.

3. Werkzeugmaschine (M) nach einem der Ansprüche 1 bis 2, **dadurch gekennzeichnet, dass** der Tisch (2) relativ zu dem Gestell (1) quer angeordnet ist.

4. Werkzeugmaschine (M) nach einem der Ansprüche 1 bis 2, **dadurch gekennzeichnet, dass** der Tisch (2) gemäß einer vertikalen Achse drehbeweglich montiert ist.

5. Werkzeugmaschine (M) nach einem der Ansprüche 1 bis 3, **dadurch gekennzeichnet, dass** sie eine Lade-/Entladevorrichtung (4) für das zu bearbeitende Werkstück aufweist, die mit dem Tisch (2) zusammenwirkt, und Mittel zum Halten des Werkstücks aufweist, die in Längsrichtung entlang des Tisches (2) beweglich entworfen und geeignet sind, um von einer Seite des Tisches (2) beladen zu werden, verrückt und an einer für die Werkzeuge (31) der Revolvertrommel (3) zugänglichen Stelle gehalten zu werden, und von der anderen Seite des Tisches (2) zum Entladen und Neubeladen verrückt zu werden.

## Claims

1. Machine tool (M) comprising a frame (1) provided on the front with a table (2) which is intended to receive the part to be produced or converted, a barrel (3) mounted on a shaft (30) having a transverse axis (XX') which is in parallel with said table (2), the machine tool being **characterized in that** the barrel (3) is carried by horizontal translatable means (32) in the direction away from and/or toward said table (2) between two lateral walls (10, 11) of said frame (1) on slide systems (12), so as to allow a front-to-rear translation of said barrel (3) which radially carries tools (31) that are each capable of being used individually to process said part according to the pivoting of said barrel (3) at a chosen angle, said horizontal translation being able to be carried out between each change of tool (31).

2. Machine tool (M) according to claim 1, **characterized in that** the shaft (30) is carried by vertical translatable means.

3. Machine tool (M) according to any of claims 1 to 2, **characterized in that** the table (2) is arranged transversely with respect to the frame (1).

4. Machine tool (M) according to any of claims 1 to 2, **characterized in that** the table (2) is mounted so as to be rotatable about a vertical axis.

5. Machine tool (M) according to any of claims 1 to 3, **characterized in that** it comprises a loading/unloading device (4) for the part to be processed, which device interacts with the table (2) and comprises means for holding said part and which are designed to move longitudinally along said table (2) and are capable of being loaded from one side of said table (2), being moved and held in a location which is accessible to the tools (31) of the barrel (3), and being moved to the other side of said table (2) in order to be unloaded and reloaded.
